# EUROPÄISCHE PATENTANMELDUNG

(11) **EP 3 290 878 A1**
(43) Veröffentlichungstag der Anmeldung: **07.03.2018**
(21) Anmeldenummer: 16186245.3
(22) Anmeldetag: 30.08.2016
(51) Int. Cl.: G01F 23/288, G01N 23/10

(54) **VORRICHTUNG ZUR FÜLLSTANDSMESSUNG EINES MEDIUMS IN EINEM BEHÄLTER UND ANORDNUNG EINER SOLCHEN VORRICHTUNG AN EINEM BEHÄLTER**

(71) Anmelder: Berthold Technologies GmbH & Co. KG, 75323 Bad Wildbad (DE)
(72) Erfinder: Mörmann, Dr. Dirk, 76476 Bischweier (DE); Hirsch, Stephan, 68199 Mannheim (DE)
(74) Vertreter: Patentanwälte Ruff, Wilhelm, Beier, Dauster & Partner mbB

(57) **Zusammenfassung**

Eine Vorrichtung (11) zur Füllstandsmessung eines Mediums (13) in einem Behälter (14) weist mehrere radioaktive Strahler (40) auf, die gemeinsam bewegbar sind um auf jeweils unterschiedlichem Höhenniveau in dem Behälter angeordnet zu werden, ein in den Behälter reichendes Schutzrohr (30) mit Erstreckung zumindest teilweise in vertikaler Richtung und ein längliches Haltemittel (32) für die Strahler (40), das in das Schutzrohr einbringbar ist und an dem die Strahler befestigt sind. Eine Aufbewahrungseinrichtung (19) für das Haltemittel (32) samt Strahlern (40), eine Verbindung (16, 27) von der Aufbewahrungseinrichtung (19) zu dem Schutzrohr (30) und eine Fördereinrichtung (22) zum Fördern des Haltemittels in das Schutzrohr hinein und aus diesem heraus sind noch vorgesehen, wobei das Haltemittel (32) längeninvariant ausgebildet ist.

## Beschreibung

### ANWENDUNGSGEBIET UND STAND DER TECHNIK

Die Erfindung betrifft eine Vorrichtung zur Füllstandsmessung und/oder zur oder Dichteprofil-Messung eines Mediums in einem Behälter sowie eine Anordnung einer solchen Vorrichtung an einem Behälter.

Aus der WO 00/22387 A1 sind eine ähnliche Vorrichtung bzw. eine entsprechende Anordnung bekannt. Dabei sind Strahler in einem Schutzrohr angeordnet, das in einen Behälter mit einem flüssigen Medium reicht. Parallel und mit geringem Abstand ist ein weiteres Schutzrohr mit Detektoren darin angeordnet, wobei die Detektoren auf derselben Höhe wie die Strahler angeordnet sind. Die Strahler können dabei an einer Haltestange angeordnet sein.

Eine weitere ähnliche Vorrichtung ist aus der WO 2015/089347 A1 bekannt. Dabei sind mehrere flexible Metallrohre vorgesehen, die in einen Behälter mit einem Medium darin reichen. Pro Metallrohr ist ein Strahler vorgesehen, wobei die Strahler auf unterschiedlicher Höhe angeordnet werden.

Nachteilig bei diesen Anordnungen ist der Aufwand, wenn die Strahler einmal aus einem solchen Schutzrohr oder Metallrohr entnommen werden müssen, beispielsweise zu Wartungszwecken oder zur Innenreinigung des Behälters.

### AUFGABE UND LÖSUNG

Der Erfindung liegt die Aufgabe zugrunde, eine eingangs genannte Vorrichtung sowie eine Anordnung einer solchen Vorrichtung an einem Behälter zu schaffen, mit denen Probleme des Standes der Technik gelöst werden können und es insbesondere möglich ist, mehrere Strahler in einem Behälter anzuordnen und dabei auch ein praxistaugliches Entnehmen der Strahler aus dem Schutzrohr zu ermöglichen sowie den Abstand Strahler zu Strahler konstant zu halten.

Gelöst wird diese Aufgabe durch eine Vorrichtung mit den Merkmalen des Anspruchs 1 sowie durch eine Anordnung mit den Merkmalen des Anspruchs 15. Vorteilhafte sowie bevorzugte Ausgestaltungen der Erfindung sind Gegenstand der weiteren Ansprüche und werden im Folgenden näher erläutert. Dabei werden manche der Merkmale nur für die Vorrichtung oder nur für die Anordnung beschrieben. Sie sollen jedoch losgelöst davon sowohl für die Vorrichtung als auch für die Anordnung selbständig und unabhängig voneinander gelten können. Der Wortlaut der Ansprüche wird durch ausdrückliche Bezugnahme zum Inhalt der Beschreibung gemacht.

Es ist vorgesehen, dass die Vorrichtung zur Füllstandsmessung eines Mediums in einem Behälter mehrere radioaktive Strahler aufweist, die gemeinsam bewegbar sind, um auf jeweils unterschiedlichem Höhenniveau in dem Behälter angeordnet zu werden. Die Abstände einzelner benachbarter Strahler können dabei variieren oder aber auch zumindest teilweise oder insgesamt gleich sein. Wenn ihr Abstand zueinander einmal festgelegt ist bleibt er so. Als radioaktive Strahler werden übliche radioaktive Strahler für einen solchen Zweck verwendet, wie sie beispielsweise in der oben genannten WO 00/22387 A1 oder WO 2015/089347 A1 beschrieben sind. Ihnen können entsprechende Detektoren zugeordnet sein.

Des Weiteren weist die Vorrichtung ein in den Behälter reichendes Schutzrohr auf, das sich zumindest teilweise in vertikaler Richtung erstreckt. Das Schutzrohr kann überwiegend in vertikaler Richtung verlaufen und dabei entweder Biegungen zwischen einzelnen vertikalen Abschnitten aufweisen oder vorteilhaft insgesamt genau vertikal verlaufen. Es kann auch parallel zu einer Wand des Behälters verlaufen und dabei einfach oder mehrfach gekrümmt sein. Ein vorteilhaftes Schutzrohr ist gerade ausgebildet.

Die Vorrichtung weist ein längliches Haltemittel für die Strahler auf, das in das Schutzrohr einbringbar ist, wobei die Strahler an dem Haltemittel befestigt sind. Vorteilhaft sind sie lösbar befestigt, beispielsweise mittels Schraubverbindungen odgl., die sich nicht von alleine lösen können. Das Haltemittel kann vorteilhaft mindestens teilweise flexibel sein, hierzu wird nachfolgend noch Näheres ausgeführt. Die Vorrichtung weist auch eine Aufbewahrungseinrichtung für das Haltemittel samt den daran angeordneten Strahlern auf. Von der Aufbewahrungseinrichtung zu dem Schutzrohr ist eine Verbindung oder ein Verbindungskanal vorgesehen, wobei der Verbindungskanal vorteilhaft relativ kurz oder möglichst kurz ist. Des Weiteren weist die Vorrichtung eine Fördereinrichtung für das Haltemittel auf, um das Haltemittel in das Schutzrohr hineinzufördern bzw. hineinzubringen und aus diesem herauszufördern bzw. herauszuziehen. Dies ist zum Reinigen, Reparieren, Austauschen oder eventuell auch Kalibrieren der Strahler notwendig. Das Haltemittel ist dabei längeninvariant ausgebildet, also in seiner Länge nicht veränderlich. Dies gilt für Kräfte in einer Größenordnung, die bei einer solchen Vorrichtung bzw. bei einer solchen erfindungsgemäßen Anordnung auftreten können. Vorteilhaft ist ein Haltemittel längeninvariant bzw. nicht längenveränderlich bis zu Kräften von mehr als 100 N bis 10 kN, besonders vorteilhaft 500 N bis 1 kN. Auch ein Temperaturkoeffizient ist zu beachten, so dass sich abhängig von der Temperatur das längliche Haltemittel nicht zu stark längt oder in seiner Länge verändert. Der Einsatzbereich solcher Vorrichtungen liegt oft bei extremen Temperaturen, beispielsweise zwischen -40°C und 200°C. Über diesen Temperaturbereich sollte eine Längenveränderung des Haltemittels im Bereich unter 1% sein, vorteilhaft unter 0,1%. Dadurch wird sichergestellt, dass die Strahler an dem Haltemittel im in das Schutzrohr eingebrachten Zustand auch stets an derselben und der gewünschten Stelle sind, wenn dies beispielsweise anhand der Position eines oberen Bereichs des Haltemittels festgestellt werden kann.

Die Aufbewahrungseinrichtung ist erfindungsgemäß so ausgebildet sein, dass sie das Haltemittel mit den Strahlern daran in nicht-langestreckter Form aufbewahrt bzw. dieses bevorzugt in rund oder abgerundet zusammengelegter oder aufgewickelter Form enthält.

Wenn das Haltemittel gleichzeitig zumindest teilweise flexibel bzw. biegbar ist und längeninvariant, so kann es in einer genannten Aufbewahrungseinrichtung im aufgerollten bzw. zusammengerollten, zusammengelegten oder sonstwie im Aufbewahrungsvolumen verkleinerten Zustand besser aufbewahrt werden als beispielsweise eine lange Stange. Durch die Längeninvarianz bzw. unveränderbare Länge kann die Genauigkeit der Vorrichtung zur Füllstandsmessung beibehalten werden, weil der Abstand Strahler zu Strahler konstant gehalten wird. Das ist wichtig für die Genauigkeit und Reproduzierbarkeit des Messergebnisses. Die Aufbewahrungseinrichtung oder ein Aufbewahrungsraum für die Strahler darin ist bevorzugt mit Blei oder anderem abschirmenden Material ummantelt. Dies ist kostenintensiv und bewirkt ein sehr hohes Gewicht, weswegen eine kleine Baugröße der Aufbewahrungseinrichtung wünschenswert ist. Wenn das Haltemittel samt Strahlern daran aufgerollt oder zusammengelegt aufbewahrt wird, benötigt es nur wenig Platz und es werden Höhe bzw. Volumen und Gewicht eingespart. Beide Einsparungen sind allgemein und insbesondere auf Ölplattformen gewünscht.

In Ausgestaltung der Erfindung ist es möglich, dass die Aufbewahrungseinrichtung eine drehbare Trommel, einen Wickelkern odgl. zum Aufwickeln des Haltemittels mit den Strahlern daran zur Aufbewahrung aufweist, beispielsweise auch eine Art Wickelseele. Darauf kann das Haltemittel in der Aufbewahrungseinrichtung aufgenommen sein, wenn es aus dem Schutzrohr entfernt bzw. herausgenommen ist. Eine solche Trommel oder ein Wickelkern können entweder auch eine Fördereinrichtung für das Haltemittel bilden, wie sie nachfolgend noch näher erläutert wird. So kann das Haltemittel sozusagen durch Aufwickeln auf der Trommel aus dem Schutzrohr entnommen werden und durch Abwickeln von der Trommel in das Schutzrohr eingebracht werden. Alternativ und vor allem für eine genaue Positionierung kann eine von einer solchen Trommel odgl. separate vorbeschriebene Fördereinrichtung vorgesehen sein, die eben auch die Genauigkeit der Positionierung des Haltemittels im Schutzrohr sicherstellt. Sie kann auch die hauptsächliche Kraft zum Herausziehen des Haltemittels aus dem Schutzrohr aufbringen. Eine vorgenannte Trommel odgl. dient dann lediglich dazu, das Haltemittel mit geringem Platzbedarf und vor allem auch geordnet und gut wieder ausbringbar aufzunehmen.

In anderer Ausgestaltung der Erfindung ist es möglich, dass die Aufbewahrungseinrichtung zur Aufbewahrung des Haltemittels mit den Strahlern daran in gerundet zusammengelegter Form ausgebildet ist. Dabei kann die Aufbewahrungseinrichtung so ausgebildet sein, dass das Haltemittel mit den Strahlern daran auf einem Boden der Aufbewahrungseinrichtung in Buchten oder ähnlicher Form abgelegt wird, also lose.

Die Form der Aufbewahrungseinrichtung kann im Wesentlichen angenähert würfelartig sein, so dass das Verhältnis Volumen zu Wandungen günstig ist.

In weiterer Ausgestaltung der Erfindung kann eine Aufbewahrungseinrichtung direkt an einem Ausgang des Schutzrohrs aus dem Behälter angeordnet sein. Dabei kann sie auch direkt über dem Schutzrohr angeordnet sein, so dass die eingangs genannte Verbindung sehr kurz bzw. sehr direkt ist. Die Aufbewahrungseinrichtung kann dabei vorteilhaft so über dem Schutzrohr angeordnet sein, dass das Haltemittel möglichst direkt und ohne größere Wege in das Schutzrohr und somit in den Behälter hineinlaufen kann. Ein eingangs genannter Verbindungskanal ist dann kurz.

In vorteilhafter Ausgestaltung der Erfindung verläuft das Schutzrohr genau vertikal. So ist das Ein- und Ausbringen des Haltemittels samt Strahlern am einfachsten.

Eine entsprechende Vorrichtung ist vorteilhaft oben auf einem Behälter angeordnet, in dem die Füllstandshöhe eines Mediums oder allgemeiner ein Dichteprofil gemessen werden soll. So können auch Grenzschichten zwischen einer Mehrzahl von Medien, insbesondere bei der Ölförderung Sand, Wasser, Erdöl, Gas odgl., erfasst werden und so deren Füllhöhe bzw. Menge bestimmt werden. Dies gilt also für Produkte von Ölproduktions-Separatoren. Ebenso können Füllstände oder Zwischenschichten bei Kohlenwasserstoffen/Säuren in Alkylierungsanlagen festgestellt werden. Besonders vorteilhaft ist die Vorrichtung dabei an einem höchsten Punkt dieses Behälters angeordnet, wobei unterhalb der Vorrichtung in dem Behälter keine sonstigen Hindernisse oder Vorrichtungen anderer Art angeordnet sein sollten.

In Ausgestaltung der Erfindung besteht das Haltemittel zumindest teilweise aus Metall. Dadurch kann sowohl eine Flexibilität als auch eine vorgenannte Längeninvarianz erreicht werden. In vorteilhafter Ausgestaltung der Erfindung besteht es im Wesentlichen aus Metall oder sogar ganz aus Metall. Eine sehr gute Beständigkeit gegen aggressive Medien oder eine chemisch aggressive Atmosphäre in der Nähe des Behälters ist dann gegeben, wenn es aus Edelstahl besteht.

In weiterer Ausgestaltung der Erfindung ist das Haltemittel derart flexibel, dass es zumindest in einer Ebene biegeflexibel oder gelenkig beweglich ist. Dies ermöglicht bereits ein Aufrollen oder Aufwickeln des Haltemittels auf eine Trommel odgl. in der Aufbewahrungseinrichtung. Eine volle Flexibilität oder gelenkige Beweglichkeit ist noch nicht einmal zwingend notwendig, kann aber auch vorteilhaft sein.

Ein vorteilhaftes Haltemittel kann einteilige und einstückige Teil-Haltemittel aufweisen, die zwischen zwei benachbarten Strahlern angeordnet sind bzw. verlaufen. So könnten beispielsweise mehrere derartige Teil-Haltemittel im Bereich der Strahler miteinander zu ihrer gesamten gewünschten Länge verbunden werden. Eine vorbeschriebene Flexibilität oder gelenkige Beweglichkeit kann dabei in einer Verbindung mit den Strahlern vorgesehen sein. So müssen die einzelnen Teil-Haltemittel nicht flexibel bzw. gelenkig sein.

In vorteilhafter Ausgestaltung der Erfindung ist das Haltemittel schubstabil. Dadurch kann erreicht werden, dass es auch in mehrfach abgebogene Schutzrohre hineingebracht werden kann, wenn beispielsweise die Reibungskraft größer ist als eine Schwerkraft, um das Haltemittel samt Strahlern in das Schutzrohr gleiten zu lassen. So können Haltemittel und Strahler auch in beispielsweise mehrfach abgebogene und/oder lange Schutzrohre hineingebracht bzw. hineingedrückt werden. Eine Schubstabilität kann sich dabei auf in einem erwartbaren Bereich befindliche Kräfte beschränken, vorzugsweise 10 N bis 1 kN, insbesondere 50 N bis 500 N.

In einer möglichen Ausgestaltung der Erfindung ist das Haltemittel eine Wellenseele oder weist eine solche Wellenseele auf. Besonders vorteilhaft wird eine Wellenseele mit mindestens zwei Lagen von gewickelten Drähten verwendet, die ineinander verlaufen. Dabei können die Drähte in unterschiedliche Richtungen gewickelt sein für eine bessere Stabilität der Wellenseele. Diese Wellenseele ist besonders gut für einfach oder auch mehrfach abgebogene Schutzrohre geeignet, da sie sich möglichst gerade bzw. mit maximalem Biegeradius einzustellen versucht.

In einer alternativen Ausgestaltung der Erfindung ist das Haltemittel eine Kette mit einzelnen Kettensegmenten. Auch derartige Ketten sind längeninvariant und sehr stabil. Eine Kette kann entweder so ausgebildet sein, dass sie verkreuzt miteinander verbundene Kettenglieder aufweist. Hier kann insbesondere eine Rundgliederkette vorgesehen sein. Dann ist auch eine Beweglichkeit in alle Richtung vorgesehen. Alternativ kann eine Rollenkette verwendet werden ähnlich einer Fahrrad- oder Antriebskette. Derartige Rollenketten können sehr leicht mit entsprechenden Zahnrädern bewegt bzw. ein- und ausgefahren werden. Dabei ist auch eine Positioniergenauigkeit sehr hoch. Eine Beweglichkeit ist dann allerdings nur in einer Ebene gegeben. Eine Schubstabilität ist bei einer Kette nur bedingt gegeben, so dass sie vor allem bei vertikalen Schutzrohren vorteilhaft verwendet werden können. Diese Schubstabilität hängt auch vom Verhältnis Innendurchmesser des Schutzrohrs zu Länge der Kettenglieder ab.

In vorteilhafter Ausgestaltung der Erfindung ist an dem Behälter nur ein einziges Schutzrohr für Strahler vorgesehen bzw. Strahler der Vorrichtung zur Erfassung eines Füllstands eines Mediums in dem Behälter sind nur in einem einzigen Schutzrohr angeordnet. Dadurch kann der Aufbau einfacher gehalten werden.

Vorteilhaft weist die Vorrichtung nur ein einziges Haltemittel für Strahler auf. So sind insbesondere in einem einzigen Schutzrohr nicht mehrere Haltemittel für Strahler vorgesehen, die sich beim Ein- und Ausbringen behindern oder beschädigen könnten.

Strahler können in gekapselter bzw. abgeschirmter Form verwendet werden. Dabei ist vorteilhaft je ein Strahler bzw. ein einziger Strahler in einer Kapsel angeordnet. Eine solche Kapsel kann dann in dem Längsverlauf des Haltemittels eingebaut sein, wobei sie vorteilhaft fest eingebaut wird. Dies bedeutet, dass die Strahler durch den Einbau in eine Kapsel als besser handhabbare Baueinheit vorliegen. Durch den Einbau einer Kapsel in den Längsverlauf des Haltemittels ist es möglich, dass das Haltemittel unterbrochen ist zur Aufnahme der Kapsel bzw. zur Verbindung mit der Kapsel. Dies kann an zwei Endbereichen, insbesondere gegenüberliegenden Endbereichen, der Kapsel erfolgen. An diesen Endbereichen können freie Enden von Teil-Haltemitteln befestigt sein, beispielsweise mittels Nieten, Splinten oder Schrauben. So kann auch eine vorgenannte Beweglichkeit oder Gelenkigkeit des gesamten Haltemittels mit den Strahlern daran erreicht werden, diese ist also nicht innerhalb des Haltemittels selbst vorzusehen. Im Sinne der Erfindung wird ein solcher Aufbau mit einem auf mehrere Teil-Haltemittel aufgeteilten Haltemittel, wobei die Teil-Haltemittel mittels der Strahler bzw. der die Strahler enthaltenden Kapseln zu einem einzigen länglichen Gebilde verbunden sind, immer noch als ein längliches Haltemittel im Sinne der Erfindung verstanden.

Es ist möglich, eine vorgenannte Kapsel mittels einer Gewindeverbindung mit Abschnitten der Teil-Haltemittel oder eines durchgehenden Haltemittels fest zu verbinden. Dies ist vor allem dann von Vorteil, wenn eine Flexibilität bzw. Gelenkigkeit oder Beweglichkeit für das gesamte Haltemittel in einzelnen Bereichen der Teil-Haltemittel selbst vorgesehen ist. So können an der Kapsel Außengewinde abstehen und an einem freien Ende eines Teil-Haltemittels Innengewinde vorgesehen sein. Durch Zusammenschrauben wird dann das gesamte Haltemittel mit den Strahlern daran hergestellt.

Für eine vorgenannte Stift-Verbindung oder Splint-Verbindung, ebenso für eine mit Nieten oder Schrauben, können an den Kapseln abstehende Vorsprünge vorgesehen sein. Diese können eine Querbohrung aufweisen. Entsprechende Vorsprünge können auch an freien Enden eines Teil-Haltemittels vorgesehen sein, wobei die jeweiligen Bohrungen in Überdeckung gebracht werden und dann ein entsprechendes längliches Verbindungsmittel hindurchgeführt wird.

In der Aufbewahrungseinrichtung ist vorteilhaft die Fördereinrichtung angeordnet. Diese kann bei den eingangs genannten Ketten ein Zahnrad bzw. ein Kettenrad sein, wie es an sich aus dem Stand der Technik bekannt ist zum Fördern von Ketten. Für eingangs genannte Wellenseelen, Drähte odgl. können es zwei mit Druck in Richtung aufeinander zu an einer Wellenseele oder einem Draht anliegende Räder oder Walzen sein.

In dem Behälter können beispielsweise Öl-Zwischenprodukte oder sonstige flüssige Medien angeordnet sein, alternativ auch mindestens schüttfähige oder rieselfähige Medien. Typischerweise sind es Sand, Wasser, Öl und Gas übereinander in Ölproduktionsseparatoren als Behälter. Die Anordnung weist auch noch eine Detektorvorrichtung auf, vorteilhaft in dem Behälter, beispielsweise in einem weiteren Schutzrohr. Die Detektorvorrichtung sollte, wie aus dem Stand der Technik bekannt ist, parallel und/oder versetzt zu den Strahlern verlaufen mit geringem Abstand für eine präzise Messung. Hierzu wird auf die eingangs genannte WO 00/22387 A1 und WO 2015/089347 A1 verwiesen. Dabei kann die Detektorvorrichtung innerhalb oder auch außerhalb des Behälters angeordnet werden, abhängig von dessen Bauform und der Anwendung.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombination bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine schematische Darstellung einer ersten Ausgestaltung einer erfindungsgemäßen Anordnung mit einer Aufbewahrungseinrichtung auf einem Behälter,
- Fig. 2: eine Abwandlung der Anordnung aus Fig. 1 mit etwas anders ausgebildeter Aufbewahrungseinrichtung,
- Fig. 3: eine vergrößerte Darstellung eines in Teil-Haltemittel zerlegten Haltemittels in Form einer Wellenseele mit einschraubbarer Kapsel mit Strahler darin,
- Fig. 4: ein alternatives Haltemittel in Form einer Rundgliederkette mit angeschraubter Kapsel mit Strahler darin und
- Fig. 5: ein weiteres alternatives Haltemittel als Rundgliederkette mit seitlich eingeschweißter Kapsel mit Strahler darin.

### DETAILLIERTE BESCHREIBUNG DER AUSFÜHRUNGSBEISPIELE

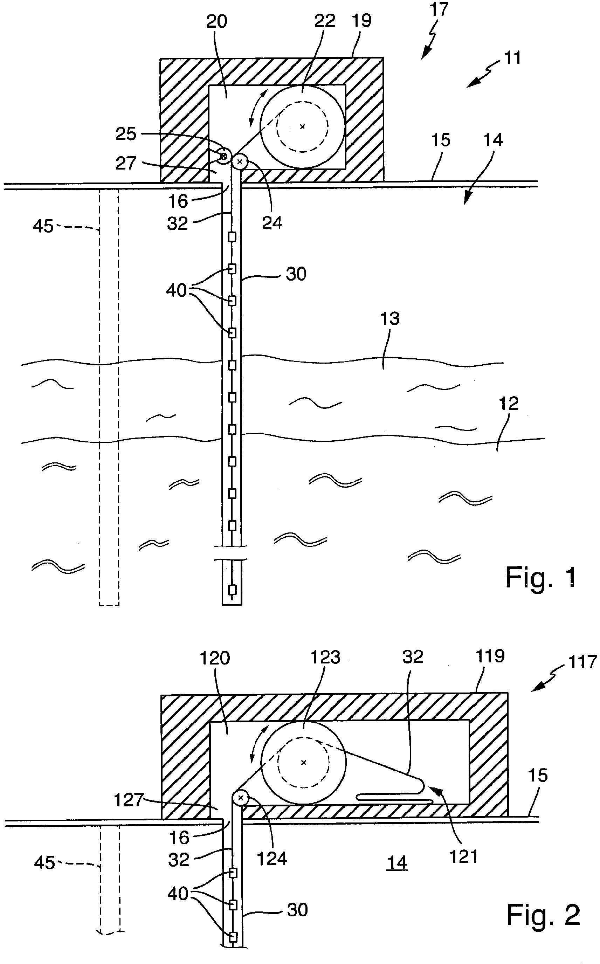

In der Fig. 1 ist eine erfindungsgemäße Anordnung 11 in einer ersten Ausgestaltung der Erfindung dargestellt. Dabei soll der Füllstand eines vorgenannten Gemischs aus Sand, Wasser, Öl und Gas bzw. die Grenzschicht zwischen Wasser 12 und Öl 13 in einem Behälter 14, beispielsweise einem größeren Tank, wie er insbesondere in Ölbohrplattformen oder in anderen Gemischen in Raffinerien, Chemieanlagen oder der ölverarbeitenden Industrie eingesetzt wird, gemessen bzw. überwacht werden. Dazu ist in einem Behälterdeckel 15 eine Behälteröffnung 16 vorgesehen, auf die eine erfindungsgemäße Vorrichtung zur Füllstandsmessung des Öls 13 bzw. zur Messung der Grenzschicht zwischen Wasser 12 und Öl 13 aufgesetzt ist bzw. die darüber befestigt ist. Über dem Öl 13 kann noch ein Gas sein.

Die Vorrichtung 17 weist im Wesentlichen eine Aufbewahrungseinrichtung 19 auf nach Art eines Kastens oder Gehäuses, die mit Blei verkleidet ist zur Abschirmung gegen Strahlen. Die Aufbewahrungseinrichtung 19 ist somit Aufbewahrung für die Strahler samt Haltemittel und auch Strahlenschutzbehälter. Dies ist notwendig bei einer Revision des Behälters. Dann werden nämlich die Strahler eingefahren und die Aufbewahrungseinrichtung 19 wird von innen an einer Zugangsöffnung 27 komplett verschlossen, so dass Personen im Behälter 14 nicht der Strahlung ausgesetzt sein können. Vorteilhaft besitzt der Behälter einen Stutzen mit einem Flansch zum Ansetzen der Aufbewahrungseinrichtung 19.

In einem Innenraum 20 der Aufbewahrungseinrichtung 19 ist eine große Trommel 22 vorgesehen mit gestrichelt dargestelltem Trommelkern und nicht dargestelltem Antrieb. Der Antrieb kann dabei auch eine Wegerfassung aufweisen, wie nachfolgend noch näher erläutert wird. Diese Wegerfassung ist von großer Bedeutung, um bei einem erneuten Einbringen des Haltemittels in das Schutzrohr bei einem bekannten zurückgelegten Weg des Haltemittels die genaue Position bzw. eine reproduzierbare Position der Strahler zu erreichen. Vorteilhaft werden die Strahler 40 samt Haltemittel 32 entweder ganz ausgefahren oder ganz herausgenommen.

An der Zugangsöffnung 27 unten an der Aufbewahrungseinrichtung 19, welche über der Behälteröffnung 16 liegt oder mit dieser fluchtet, ist rechts ein Führungsrad 24 vorgesehen. Es kann als Rad, Nutrad, Zahnrad oder breite Walze odgl. ausgebildet sein. Gegenüber dem Führungsrad 24 kann ein Andrückrad 25 angeordnet sein, das aber nur optional vorhanden ist. Es dient dazu, wenn ein nachfolgend näher erläutertes Haltemittel 32 nicht formschlüssig an dem Führungsrad 24 anliegt oder von diesem eingegriffen wird, das Haltemittel derart am Führungsrad 24 anzudrücken, dass sich kein unerwünschter Schlupf ergibt. Dann ist eine gute Führung des Haltemittels 32 gewährleistet. Zusätzlich oder alternativ kann eine vorgenannte Wegerfassung für das Haltemittel 32 auch an dem Führungsrad 24 vorgesehen sein. In nochmals weiterer Ausgestaltung der Erfindung kann neben der Trommel 22 auch das Führungsrad 24 angetrieben sein und beispielsweise zusätzlich oder ganz allgemein hauptsächlich das Haltemittel 32 fördern bzw. nach oben ziehen. So erfolgt an der Trommel 22 lediglich eine Rotation zum eingangs beschriebenen Aufnehmen bzw. Aufwickeln des Haltemittels.

An die Behälteröffnung 16 ist von unten ein Schutzrohr 30 angesetzt, vorteilhaft befestigt bzw. angeschraubt oder angeschweißt. Das Schutzrohr 30 kann alternativ auch am unteren Bereich der Aufbewahrungseinrichtung 19 befestigt sein, so dass hier auf alle Fälle eine dichte Verbindung vorgesehen ist. Des Weiteren kann so ganz allgemein eine eigene Baueinheit von Aufbewahrungseinrichtung 19 und Schutzrohr 30 ausgebildet werden.

Parallel zu dem Schutzrohr verläuft ein gestrichelt dargestelltes Detektorrohr 45. In diesem befinden sich zu den Strahlern 40 korrespondierende Detektoren, wie dies aus dem eingangs genannten Stand der Technik bekannt ist. Die Detektoren können dabei vorteilhaft auf derselben vertikalen Höhe angeordnet sein wie die Strahler 40. Wie zuvor erläutert kann das Detektorrohr 45 bzw. können die Detektoren außerhalb des Behälters 14 angeordnet sein, beispielsweise auch in einem gebogenen bzw. gekrümmten Rohr, das der Außenform des Behälters 14 folgt.

Ähnlich wie zuvor für das Schutzrohr 30 beschrieben kann das Detektorrohr 45 ebenfalls an der Unterseite der Aufbewahrungseinrichtung 19 befestigt sein. So kann eine Baueinheit mit den beiden Rohren 30 und 45 geschaffen werden, die an einem Behälter 14 bzw. einem Behälterdeckel 15 mit zwei entsprechenden Öffnungen angeordnet wird, so dass die beide Rohre 30 und 45 nach unten reichen. Für eine platzsparende Anordnung könnte dabei das Detektorrohr 45 rechts neben dem Schutzrohr 30 angeordnet sein, und zwar in etwa unterhalb der Trommel 22. In nochmals weiterer, leicht vorstellbarer alternativer Ausgestaltung der Erfindung könnte für das Detektorrohr 45 bzw. die darin angeordneten Detektoren, wenn sie ebenfalls an einem flexiblen und längeninvariablen Haltemittel befestigt sind ähnlich wie die Strahler 40, eine weitere Trommel odgl. wie bei der Aufbewahrungseinrichtung 19 vorgesehen sein. So könnten auch die Detektoren zur Wartung, Reparatur odgl. leicht aus dem Behälter 14 bzw. dem Detektorrohr 45 herausgezogen werden und dabei gleichzeitig praxistauglich und raumsparend aufbewahrt werden, allerdings ist dies bevorzugt in einer anderen Aufbewahrungseinrichtung wegen der Strahlung. Ebenso können sie wieder genau und lagegetreu in den Behälter eingebracht werden.

Von der Trommel 22 läuft das längliche Haltemittel 32 abgehend über das Führungsrad 24 durch die Zugangsöffnung 27 und die Behälteröffnung 16 in das Schutzrohr 30. Das Haltemittel 32 kann dabei bis kurz vor das untere Ende des Schutzrohrs 30 reichen, dessen Länge also maximal ausnutzen. An dem Haltemittel 32 liegt von links das Andrückrad 25 an zum vorbeschriebenen Andrücken des Haltemittels 32 an das Führungsrad 24.

An dem Haltemittel 32 sind vereinfacht dargestellte Strahler 40 angeordnet. Diese können mit gleichem Abstand zueinander angeordnet sein, beispielsweise alle 5 cm bis 10 cm oder sogar 20 cm bis 100 cm. Auch unterschiedliche Abstände sind vorstellbar, können aber die universelle Verwendbarkeit eines solchen Haltemittels einschränken.

Das Haltemittel 32 soll erfindungsgemäß längeninvariant sein, sich also nicht durch sein Eigengewicht plus das Gewicht der Strahler 40, das im Schutzrohr 30 nach unten hängt und nach unten zieht, längen lassen bzw. verlängern. Dabei gilt dies für im normalen Betrieb erwartbare Kräfte, die vorteilhaft in einem eingangs genannten Bereich liegen können. Des Weiteren ist das Haltemittel 32 vorteilhaft derart flexibel, dass es sich auf der Trommel 22 aufwickeln lässt und zwar vorteilhaft vollständig. So kann das Haltemittel 32 samt Strahlern 40 vollständig aus dem Schutzrohr 30 entfernt werden bzw. auch der unterste Strahler 40 kann zu Wartungs-, Ersatz- oder Reparaturzwecken gut erreicht werden.

Die Aufbewahrungseinrichtung 19 kann, da es sich um radioaktive Strahler 40 handelt, entsprechend gedämmt bzw. verkleidet sein. Hierfür kann sie aus einem die Strahlung gut abschirmenden Material bestehen, insbesondere Blei enthalten.

Eine alternative Ausgestaltung einer Anordnung 111 einer Aufbewahrungseinrichtung 119 an dem Behälter 14 entsprechend Fig. 1 mit Behälterdeckel 15 und Detektor 45 ist in der Fig. 2 dargestellt. Hier kann ein längliches Haltemittel 32 mit Strahlern 40 eingesetzt werden, wie es auch grundsätzlich demjenigen der Fig. 1 entsprechen kann. Das Haltemittel 32 kann hier aber eines sein, das trotz seiner Flexibilität nicht sehr gut auf eine Trommel aufgewickelt werden kann oder nicht aufgewickelt werden sollte. Anstelle der Trommel 22 aus Fig. 1 zum Aufwickeln des Haltemittels samt Strahlern darauf weist die Aufbewahrungseinrichtung 119 im Innenraum 120 ein Transportrad 123 auf. Dieses kann angetrieben sein und zusammen mit einem Führungsrad 124 an einer Zugangsöffnung 127 der Aufbewahrungseinrichtung 119 über einer Behälteröffnung 16 das längliche Haltemittel 32 aus dem Schutzrohr 30 nach oben oder nach unten bewegen. Wird das Haltemittel 132 nach oben bzw. aus dem Schutzrohr 30 heraus gefördert oder bewegt, so wird es von dem Transportrad 123 in einen rechts daneben angeordneten Ablageraum 121 einfach hinein gefördert bzw. dort abgelegt. Eine solche Ablage kann unter Umständen kraft- und materialschonender erfolgen als ein Aufwickeln entsprechend Fig. 1, insbesondere weil das Haltemittel 32 mit größeren Radien bzw. Schlaufen abgelegt werden kann. Ein hauptsächlicher Antrieb kann hier über das Transportrad 123 erfolgen. Ebenso kann, ähnlich wie zuvor erläutert, eine Wegerfassung des eingeholten oder ausgebrachten Haltemittels 30 am Transportrad 123 oder an dem Führungsrad 124 erfolgen.

Ein weiterer Vorteil einer Aufbewahrungseinrichtung 119 gemäß Fig. 2 ist derjenige, dass das Haltemittel 32 und vor allem die Strahler 40 in dem Ablageraum 121 einigermaßen gut zugänglich sind, beispielsweise für vorgenannte Wartungs- oder Reparaturzwecke. Durch eine hier nicht dargestellte Zugangsklappe odgl. kann der Ablageraum 121 von außen zugänglich gemacht werden und an mehreren Stellen können an dem Haltemittel 32 bzw. an Strahlern 40 Arbeiten durchgeführt werden. Dies ist nicht möglich, wenn alles auf eine Trommel 22 entsprechend Fig. 1 aufgewickelt ist. Allerdings ist eine Wartung vor Ort typischerweise wegen der Strahlengefahr nicht vorgesehen.

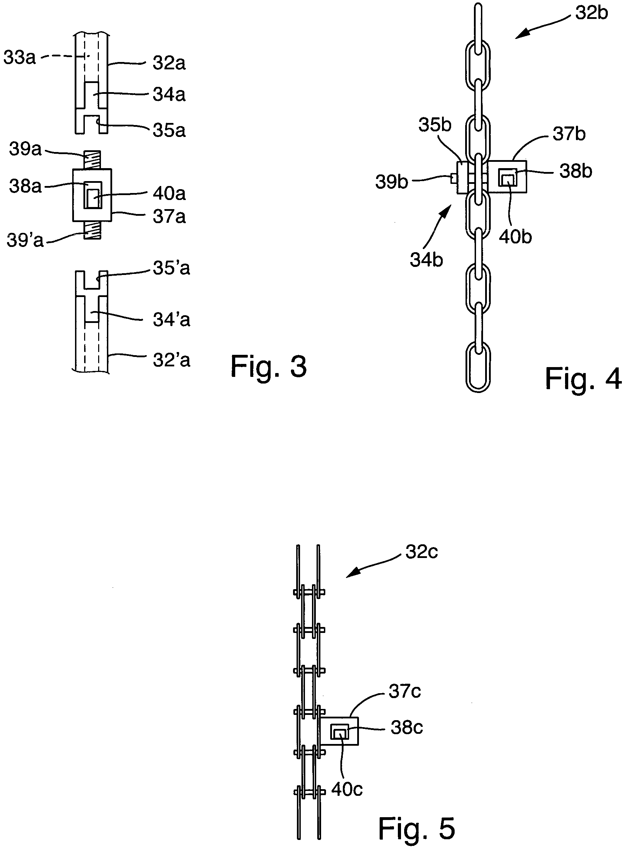

Verschiedene Ausgestaltungen eines länglichen Haltemittels 32 sowie Möglichkeiten der Befestigung eines Strahlers 40 daran sind in den Fig. 3 bis 5 dargestellt. In der Fig. 3 ist ein Haltemittel 32a als Teil-Haltemittel in Form einer eingangs genannten Wellenseele ausgebildet. Diese Wellenseele 32a ist aus Metall gefertigt und weist vorteilhaft zwei ineinander liegende Lagen von gewendelten Metalldrähten auf. Insbesondere liegen diese Lagen sehr eng zusammen. Ein solches Haltemittel aus Wellenseelen 32a ist schubstabil und kann so auch in Schutzrohre eingebracht werden, die einen komplizierten und unter Umständen mehrfach gebogenen Verlauf aufweisen oder etwas verbeult sind odgl.. Gleichzeitig ist dessen Flexibilität ausreichend gut, um in Buchten abgelegt zu werden oder auf eine Trommel aufgewickelt zu werden. Schließlich ist bei ausreichend stabiler Fertigung die Längeninvarianz auch ausreichend für die hier beschriebenen Zwecke. Selbst die zuvor genannten Kräfte von 10 N bis 100 N oder sogar 500 N können stabil hergestellte Wellenseelen 32a nicht längen.

Ein Strahler 40 kann entweder in einfacher Ausgestaltung an die Außenseite einer durchgehenden Wellenseele 32a befestigt werden, beispielsweise mit einer Schelle oder einer Klemme befestigt werden. Alternativ kann ein Einsatzstück 34a vorgesehen sein, das mit einem nach oben reichenden Absatz in einen Seelenraum 33a eingedrückt wird. Unter Umständen kann hier ein zu dem inneren gewendelten Verlauf passendes Gewinde vorgesehen sein, so dass das Einsatzstück 34a sozusagen in die Wellenseele 32a bzw. deren Seelenraum 33a eingeschraubt wird.

Am gegenüberliegenden Ende weist das Einsatzstück 34a ein Innengewinde 35a auf. Darin kann eine Kapsel 37a mit nach oben weisendem, passendem Außengewinde 39a eingeschraubt werden.

Unten an der Kapsel 37a ist ein weiteres Außengewinde 39a' vorgesehen, das in ein Innengewinde 35a' eines unteren Einsatzstückes 34a' eingeschraubt werden kann. Das Einsatzstück 34a' kann im Prinzip wie das obere Einsatzstück 34a an der Wellenseele 32a befestigt sein bzw. mit passendem Gewinde in einen Seelenraum eingeschraubt werden.

Es ist gut zu erkennen aus der Fig. 3, dass sich mit dieser Ausgestaltung ein längliches Haltemittel 32a aus Abschnitten bzw. Teil-Haltemitteln von Wellenseelen ergibt, die durch eine Kapsei 37a zusammengehalten sind. In der Kapsel 37a ist ein Kapselraum 38a vorgesehen. Darin ist ein Strahler 40 angeordnet.

Auch wenn hier in der Fig. 3 die eigentliche Wellenseele 32a nicht durchgängig ist, sondern immer wieder durch die eingeschraubten Kapseln 37a unterbrochen ist und in die Teil-Haltemittel unterteilt ist, so wird im Sinne der Erfindung doch von einem länglichen und insgesamt durchgehenden Haltemittel gesprochen. Dieses weist auch die erfindungsgemäße Längeninvarianz auf, wie zuvor erläutert worden ist.

In leicht vorstellbarer alternativer Ausgestaltung könnten anstelle der flexiblen Wellenseelen 32a auch massive Metall-Stäbe als Teil-Haltemittel verwendet werden. Eine Verbindung zu den dazwischen eingesetzten Kapseln 37 mit Strahlern 40 darin könnte dann, wie eingangs erläutert worden ist, derart gelenkig ausgebildet sein, dass eine Art Gliederkette vorliegt. Dies wäre dann ebenfalls wieder ein erfindungsgemäßes, längeninvariantes und bewegbares bzw. flexibles Haltemittel.

In der Fig. 4 ist eine alternative Ausgestaltung des Haltemittels als Rundgliederkette 32b dargestellt. Die Rundgliederkette 32b ist durchgehend und in ihrer Länge nicht unterbrochen mit einzelnen Rundgliedern bzw. länglichen Kettengliedern, also ein durchgehendes Haltemittel. Ein Strahler 40b ist in einer Kapsel 37b bzw. deren Kapselraum 38b angeordnet. Von der Kapsel 37b steht nach links ein längliches Gewinde ab, welches durch eine Gliedöffnung eines Kettengliedes durchgesteckt ist. Auf ein Außengewinde 39a des so gebildeten Stücks 34b kann eine Mutter 35b odgl. aufgeschraubt werden. So wird die Kapsel 37b samt Strahler 40b fest an der Rundgliederkette 32b befestigt. In diesen Bereich ist dann zwar die Beweglichkeit der Rundgliederkette 32b eingeschränkt, insgesamt ist sie aber dennoch ausreichend bewegbar und flexibel, um auf eine Trommel entsprechend Fig. 1 aufgewickelt zu werden oder entsprechend Fig. 2 in mehreren Buchten abgelegt zu werden.

Alternativ könnte die Rundgliederkette 32b auch aufgetrennt sein in mehrere einzelne Kettenabschnitte ähnlich Fig. 3 als Teil-Haltemittel. Diese können dann durch Einsätze bzw. Einsatzstücke 34b samt Kapseln und Strahlern darin miteinander verbunden werden und so ein durchgehendes längliches Haltemittel samt Strahlern ergeben.

In einer nochmals weiteren Ausgestaltung der Erfindung gemäß Fig. 5 ist eine Rollenkette 32c vorgesehen. Ähnlich wie die Rundgliederkette 32b aus Fig. 4 ist auch die Rollenkette 32c durchgehend und ohne Unterbrechung. Eine Kapsel 37c mit Kapselraum 38c und Strahlern 40c darin ist seitlich an ein breites Kettenglied befestigt, beispielsweise festgeschweißt oder festgeschraubt. So kann der Innenraum in diesem Kettenglied erhalten bleiben, wodurch die Rollenkette 32c, wie aus der Darstellung der Fig. 5 gut zu ersehen ist, nicht nur ihre volle Gelenkigkeit bewahrt, sondern auch sehr gut mit beispielsweise einem Zahnrad als Führungsrad 24 entsprechend Fig. 1 oder Führungsrad 124 entsprechend Fig. 2 schlupffrei gefördert werden kann.

Auch bei der Rollenkette 32c der Fig. 5 kann eine Aufteilung in einzelne Abschnitte bzw. Teil-Haltemittel erfolgen mit einzusetzenden Einsatzstücken bzw. Kapseln samt Strahlern darin, ähnlich wie dies in Fig. 3 dargestellt ist.

So können die eingangs genannten Vorteile einer sehr genauen und einfachen Positionierung der einzelnen Strahler in einer Messposition entsprechend Fig. 1 in Kombination mit einer Aufbewahrungseinrichtung samt Abschirmung nach außen, die nicht viel Platz benötigt, erreicht werden. Dies erhöht eine Messgenauigkeit, spart Herstellungskosten und Montagekosten sowie erlaubt eine einfachere Handhabung der Strahler und eine Abschirmung bei der Montage und einer Revision bzw. Wartung. Da außerdem auch nur noch ein einziges Haltemittel für Strahler vorhanden ist, kann bei einem Ein- und Ausfahren der Strahler nichts mehr verwickelt werden. Schließlich kann auch noch der Durchmesser des Schutzrohrs reduziert werden.

Eine Wellenseele als Haltemittel weist auch noch den allgemeinen Vorteil auf, dass diese immer einen maximalen Biegeradius annimmt bzw. einen geraden Zustand anstrebt und somit in einem einfach oder mehrfach gebogenen Schutzrohr eine sehr hohe Positionierungsgenauigkeit erreicht. So ist sichergestellt, dass die Strahler nach Entnahme wieder in die gleiche Position gebracht werden. Das vermeidet eine Neu-Kalibrierung der Messung. Die genaue Strahlerpositionierung bzw. Reproduzierbarkeit ist eben sehr wichtig.

In nochmals weiterer Ausgestaltung der Erfindung kann als Haltemittel ein Drahtseil verwendet werden. Dies kann zwar grundsätzlich auch, ähnlich wie in Fig. 3 dargestellt, in einzelne Abschnitte unterteilt sein, die dann miteinander verbunden werden, beispielsweise mittels Kapseln odgl., die die Strahler enthalten. Vorteilhaft wird bei einem Drahtseil jedoch eine Anordnung der Strahler in Kapseln von außen vorgenommen, beispielsweise mit U-förmigen Schraubklemmen odgl..

## Patentansprüche

1. Vorrichtung (17, 117) zur Füllstandsmessung und/oder zur Dichteprofil-Messung eines Mediums (13) in einem Behälter (14), wobei die Vorrichtung aufweist:
- mehrere radioaktive Strahler (40), die gemeinsam bewegbar sind um auf jeweils unterschiedlichem Höhenniveau in dem Behälter (14) angeordnet zu werden,
- ein in den Behälter (14) reichendes Schutzrohr (30) mit Erstreckung zumindest teilweise in vertikaler Richtung,
- ein längliches Haltemittel (32) für die Strahler (40), das in das Schutzrohr (30) einbringbar ist, wobei das Haltemittel (32) längeninvariant ausgebildet ist und wobei die Strahler (40) an dem Haltemittel (32) befestigt sind,
- eine Aufbewahrungseinrichtung (19, 119) für das Haltemittel (32) samt Strahlern (40),
- eine Verbindung (16, 27, 127) von der Aufbewahrungseinrichtung (19, 119) zu dem Schutzrohr (30),
- eine Fördereinrichtung (22, 123, 124) für das Haltemittel zum Fördern des Haltemittels (32) in das Schutzrohr (30) hinein und aus diesem heraus,
**dadurch gekennzeichnet, dass** die Aufbewahrungseinrichtung (19, 119) zur Aufbewahrung des Haltemittels (32) mit den Strahlern (40) daran in nicht-langgestreckter Form ausgebildet ist.

2. Vorrichtung nach Anspruch 1, **dadurch gekennzeichnet, dass** die Aufbewahrungseinrichtung (19, 119) zur Aufbewahrung des Haltemittels (32) mit den Strahlern (40) daran in rund zusammengelegter Form ausgebildet ist, wobei insbesondere die Aufbewahrungseinrichtung (19) eine Trommel (22) aufweist zum Aufwickeln des Haltemittels (32) mit den Strahlern (40) daran zur Aufbewahrung.

3. Vorrichtung nach Anspruch 1, **dadurch gekennzeichnet, dass** die Aufbewahrungseinrichtung (19, 119) zur Aufbewahrung des Haltemittels (32) mit den Strahlern (40) daran in gerundet zusammengelegter Form ausgebildet ist, wobei insbesondere die Aufbewahrungseinrichtung (119) ausgebildet ist zum Ablegen des Haltemittels (32) mit den Strahlern (40) daran auf einem Boden der Aufbewahrungseinrichtung in Buchten oder ähnlicher Form.

4. Vorrichtung nach einem der vorhergehenden Ansprüche, **dadurch gekennzeichnet, dass** die Aufbewahrungseinrichtung (19, 119) direkt am Ausgang (16) des Schutzrohrs (30) aus dem Behälter (14) angeordnet ist, vorzugsweise direkt über dem Schutzrohr.

5. Vorrichtung nach einem der vorhergehenden Ansprüche, **dadurch gekennzeichnet, dass** das Haltemittel (32) zumindest teilweise aus Metall besteht, insbesondere im Wesentlichen aus Metall besteht.

6. Vorrichtung nach einem der vorhergehenden Ansprüche, **dadurch gekennzeichnet, dass** das Haltemittel (32) zumindest in einer Ebene biegeflexibel oder gelenkig beweglich ist, wobei es vorzugsweise in alle Richtungen biegeflexibel oder gelenkig beweglich ist,.

7. Vorrichtung nach einem der vorhergehenden Ansprüche , **dadurch gekennzeichnet, dass** das Haltemittel (32a) schubstabil ist.

8. Vorrichtung nach einem der vorhergehenden Ansprüche, **dadurch gekennzeichnet, dass** das Haltemittel eine Wellenseele (32a) ist, insbesondere eine Wellenseele mit mindestens zwei Lagen von gewickelten Drähten.

9. Vorrichtung nach einem der Ansprüche 1 bis 7, **dadurch gekennzeichnet, dass** das Haltemittel eine Kette ist mit einzelnen Kettensegmenten, vorzugsweise entweder eine Kette (32b) mit verkreuzt miteinander verbundenen Kettengliedern ist oder eine Rollenkette (32c) ist.

10. Vorrichtung nach einem der vorhergehenden Ansprüche, **dadurch gekennzeichnet, dass** sie ein einziges Schutzrohr (39) und/oder ein einziges Haltemittel (32) für Strahler (40) aufweist an dem Behälter (14).

11. Vorrichtung nach einem der vorhergehenden Ansprüche, **dadurch gekennzeichnet, dass** die Strahler (40) gekapselt bzw. abgeschirmt sind, wobei vorzugsweise je ein Strahler in einer Kapsel (37) angeordnet ist und die Kapsel in den Längsverlauf des Haltemittels (32) eingebaut ist, insbesondere fest eingebaut ist.

12. Vorrichtung nach Anspruch 11, **dadurch gekennzeichnet, dass** das Haltemittel (32) unterbrochen ist und mehrere Teil-Haltemittel (32a) aufweist zur Aufnahme der Kapsel (37a) bzw. zur Verbindung mit der Kapsel an zwei Endbereichen (39a, 39a') der Kapsel, vorzugsweise mit freien Enden der Teil-Haltemittel (32a) an gegenüberliegenden Endbereichen der Kapsel.

13. Vorrichtung nach Anspruch 11 oder 12, **dadurch gekennzeichnet, dass** die Kapsel (37a) mittels einer Gewindeverbindung (35a, 35a', 39a, 39a') mit Abschnitten des Haltemittels bzw. des Teil-Haltemittels (32a) fest verbunden ist, wobei vorzugsweise an der Kapsel (37a) abstehende Außengewinde (39a, 39a') vorgesehen sind und an freien Enden des Teil-Haltemittels Innengewinde (35a, 35a') vorgesehen sind.

14. Vorrichtung nach Anspruch 11 oder 12, **dadurch gekennzeichnet, dass** die Kapsel mittels einer Stift-Verbindung oder Splint-Verbindung mit Abschnitten der freien Enden der Teil-Haltemittel verbunden ist, wobei vorzugsweise an der Kapsel abstehende Vorsprünge vorgesehen sind und an freien Enden der Teil-Haltemittel korrespondierende Vertiefungen vorgesehen sind.

15. Anordnung (11, 111) einer Vorrichtung (17, 117) nach einem der vorhergehenden Ansprüche an einem Behälter (14), vorzugsweise an einem Behälter für Produkte (13) von Ölproduktions-Separatoren, wobei die Anordnung eine Detektorvorrichtung (45) aufweist zur Erkennung einer Lage und/oder Höhe der Strahler (32), wobei insbesondere das Schutzrohr (30) von oben in den Behälter (14) ragt, insbesondere vertikal und/oder parallel zu einer Behälterwand nach unten verläuft, wobei vorzugsweise die Aufbewahrungseinrichtung (19, 119) direkt über dem Ausgang (16) des Schutzrohrs (30) aus dem Behälter (14) angeordnet ist.
